# EUROPEAN PATENT SPECIFICATION

(11) **EP 3 777 248 B1**
(45) Date of publication and mention of the grant of the patent: **29.10.2025**
(21) Application number: 19781890.9
(22) Date of filing: 13.03.2019
(51) Int. Cl.: H04S 7/00, A63F 13/54, G06T 19/00, G10L 19/008, G06F 3/16, G06F 3/01

(54) **AN APPARATUS AND A METHOD FOR CONTROLLING PLAYBACK OF SPATIAL AUDIO**
VORRICHTUNG UND VERFAHREN ZUR STEUERUNG DER WIEDERGABE VON RÄUMLICHEM AUDIO
APPAREIL ET PROCÉDÉ POUR CONTRÔLER UNE LECTURE DE SON SPATIAL

(30) Priority: 04.04.2018 FI 20185310
(43) Date of publication of application: 17.02.2021
(73) Proprietor: Nokia Technologies Oy, 02610 Espoo (FI)
(72) Inventor: VILERMO, Miikka, 37200 Siuro (FI); TAMMI, Mikko, 33310 Tampere (FI); LAAKSONEN, Lasse Juhani, 33210 Tampere (FI); LEHTINIEMI, Arto, 33880 Lempäälä (FI)
(74) Representative: Berggren Oy
(86) International application number: PCT/FI2019/050213
(87) International publication number: WO 2019/193244

(56) References cited:
- WO-A1-2018/045112
- US-A1- 2008 130 923
- US-A1- 2013 208 898
- US-A1- 2014 328 505
- US-A1- 2016 134 988
- US-A1- 2018 046 431
- PUOMIO, O. ET AL.: "Optimization of Virtual Loudspeakers for Spatial Room Acoustics Reproduction with Headphones", APPLIED SCIENCES, vol. 7, no. 12, 9 December 2017 (2017-12-09), XP055644298, Retrieved from the Internet <URL:https://www.mdpi.com/2076-3417/7/12/1282> [retrieved on 20190614]
- RODENAS, J. ET AL.: "Derivation of an optimal directivity pattern for sweet spot widening in stereo sound reproduction", THE JOURNAL OF THE ACOUSTICAL SOCIETY OF AMERICA, vol. 113, no. 267, 8 January 2003 (2003-01-08), XP012003229, Retrieved from the Internet <URL:https://asa.scitation.org/doi/10.1121/1.1527928> [retrieved on 20190614]
- UNITY TECHNOLOGIES: "Audio Spatializer SDK", UNITY TECHNOLOGIES, 19 June 2017 (2017-06-19), XP055644301, Retrieved from the Internet <URL:https://web.archive.org/web/20170706051649/https://docs.unity3d.com/Manual/AudioSpatializerSDK.html> [retrieved on 20190614]

## Description

### TECHNICAL FIELD

The present invention relates to an apparatus and a method for controlling playback of spatial audio.

### BACKGROUND

Volumetric video and audio data represent a three-dimensional scene with spatial audio, which can be used as input for virtual reality (VR), augmented reality (AR) and mixed reality (MR) applications. The user of the application can move around in the blend of physical and digital content, and digital content presentation is modified according to user's position and orientation. Most of the current applications operate in three degrees-of-freedom (3-DoF), which means that head rotation in three axes yaw/pitch/roll can be taken into account. However, the development of VR/AR/MR applications is eventually leading to 6-DoF volumetric virtual reality, where the user is able to freely move in a Euclidean space (x, y, z) and rotate his/her head (yaw, pitch, roll).

When a user listens to a band or any other sound source in virtual reality or augmented reality, the sound from each of the players is processed and played back to the user depending on the user position relative to the players. Also, if the user is wearing headphones the audio may be played back using Head Related Transfer Functions (HRTFs). HRTFs affect the played audio. In particular, individualized HRTFs may have a big effect. The played audio signal may therefore change drastically depending on the user position. Music producers may don't want to allow people to listen to music that is too far from the desired original, yet user position needs to have an effect on the music to keep the VR illusion working.

The international patent application WO 2018/045112 A1 discloses a computer-implemented method for modifying a simulation generated by a wearable simulation system, including acquiring sensor data from an environment in which the wearable simulation system is located, determining that the sensor data meets a first criterion, identifying a first protocol corresponding to the first criterion, incorporating a first portion of data into the simulation based on the first protocol, where the first portion of data comprises at least one of a representation of a portion of the sensor data and a signal that originates from the environment. The purpose of the method is to reduce the risk of the user missing important real-world events or being otherwise unaware of real-world events.

An optical sensor array receives optical signals from environment and acoustic sensor array receives acoustic signals from environment. Based on the optical signals and the acoustic signals, an environment engine generates environment data. Environment data includes a model of the spatial, visual, and/or acoustic environment relative to user.

### SUMMARY

Now, an improved method and technical equipment implementing the method has been invented, by which the above problems are alleviated.

Various aspects of the invention include a method and an apparatus, which are characterized by what is stated in the independent claims. Various details of the invention are disclosed in the dependent claims and in the corresponding images and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

### BRIEF DESCRIPTION OF THE DRAWINGS

For a more complete understanding of example embodiments of the present invention, reference is now made to the following descriptions taken in connection with the accompanying drawings in which:
Fig. 1 shows a system capable of capturing and encoding volumetric video and audio data for representing a 3D scene with spatial audio;
Fig. 2 shows an example of an encoding device in accordance with an embodiment;
Fig. 3 shows an example of a playback device in accordance with an embodiment;
Fig. 4 illustrates an example situation in which users are listening to music and utilizing virtual reality or augmented reality, according to an embodiment;
Fig. 5 shows a simplified block diagram of a system, in accordance with an embodiment;
Fig. 6 shows how a head mounted display may process sound according to an embodiment;
Fig. 7 illustrates reflection processing according to an embodiment;
Fig. 8 shows a flow chart for generating metadata according to an embodiment; and
Fig. 9 shows a flow chart for using the metadata by a listener's device according to an embodiment.

### DETAILED DESCRIPTON OF SOME EXAMPLE EMBODIMENTS

In the following, several embodiments will be described in the context of volumetric audio coding. It is to be noted, however, that while some of the embodiments are described relating to certain audio coding technologies, the invention is not limited to any specific volumetric audio technology or standard. In fact, the different embodiments have applications in any environment where reverberation information of volumetric audio scene is required to be conveyed.

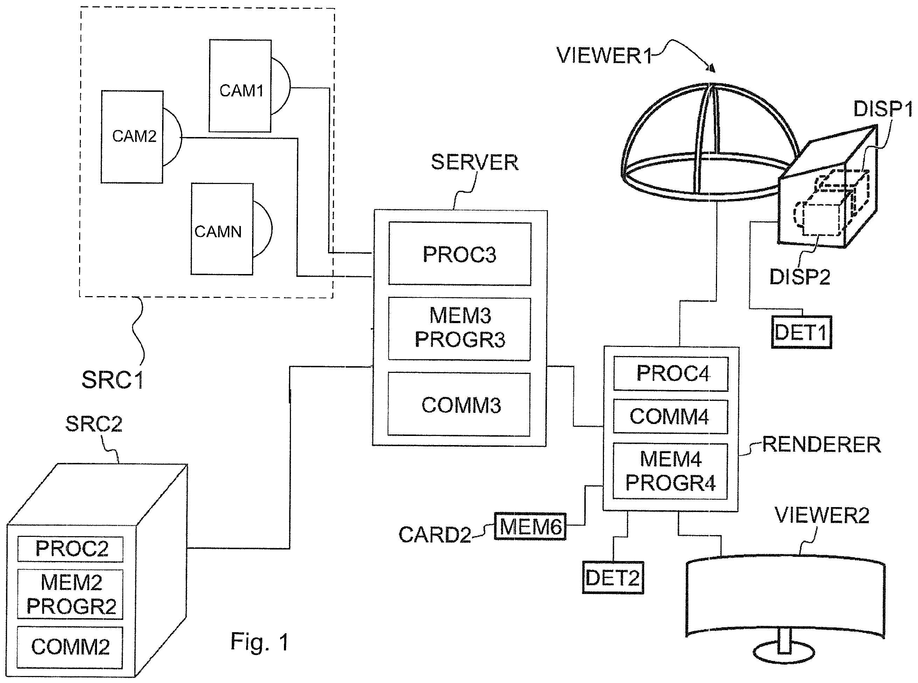

Fig. 1 shows a system for capturing, encoding, decoding, reconstructing and viewing a three-dimensional scheme, that is, for 3D video and 3D audio digital creation and playback. The system is capable of capturing and encoding volumetric video and audio data for representing a 3D scene with spatial audio, which can be used as input for virtual reality (VR), augmented reality (AR) and mixed reality (MR) applications. The task of the system is that of capturing sufficient visual and auditory information from a specific scene to be able to create a scene model such that a convincing reproduction of the experience, or presence, of being in that location can be achieved by one or more viewers physically located in different locations and optionally at a time later in the future. Such reproduction requires more information that can be captured by a single camera or microphone, in order that a viewer can determine the distance and location of objects within the scene using their eyes and their ears. To create a pair of images with disparity, two camera sources are used. In a similar manner, for the human auditory system to be able to sense the direction of sound, at least two microphones are used (the commonly known stereo sound is created by recording two audio channels). The human auditory system can detect the cues, e.g. in timing difference of the audio signals to detect the direction of sound.

The system of Fig. 1 may consist of three main parts: image/audio sources, a server and a rendering device. A video/audio source SRC1 may comprise multiple cameras CAM1, CAM2, ..., CAMN with overlapping field of view so that regions of the view around the video capture device is captured from at least two cameras. The video/audio source SRC1 may comprise multiple microphones uP1, uP2, ..., uPN to capture the timing and phase differences of audio originating from different directions. The video/audio source SRC1 may comprise a high-resolution orientation sensor so that the orientation (direction of view) of the plurality of cameras CAM1, CAM2, ..., CAMN can be detected and recorded. The cameras or the computers may also comprise or be functionally connected to means for forming distance information corresponding to the captured images, for example so that the pixels have corresponding depth data. Such depth data may be formed by scanning the depth or it may be computed from the different images captured by the cameras. The video source SRC1 comprises or is functionally connected to, or each of the plurality of cameras CAM1, CAM2, ..., CAMN comprises or is functionally connected to a computer processor and memory, the memory comprising computer program code for controlling the source and/or the plurality of cameras. The image stream captured by the video source, i.e. the plurality of the cameras, may be stored on a memory device for use in another device, e.g. a viewer, and/or transmitted to a server using a communication interface. It needs to be understood that although a video source comprising three cameras is described here as part of the system, another amount of camera devices may be used instead as part of the system. In some embodiments there are no camera devices involved but only one or more audio devices.

One or more two-dimensional video bitstreams and one or more audio bitstreams may be computed at the server SERVER or a device RENDERER used for rendering, or another device at the receiving end. The devices SRC1 and SRC2 may comprise or be functionally connected to one or more computer processors (PROC2 shown) and memory (MEM2 shown), the memory comprising computer program (PROGR2 shown) code for controlling the source device SRC1/SRC2. The image/audio stream captured by the device may be stored on a memory device for use in another device, e.g. a viewer, or transmitted to a server or the viewer using a communication interface COMM2. There may be a storage, processing and data stream serving network in addition to the capture device SRC1. For example, there may be a server SERVER or a plurality of servers storing the output from the capture device SRC1 or device SRC2 and/or to form a visual and auditory scene model from the data from devices SRC1, SRC2. The device SERVER comprises or is functionally connected to a computer processor PROC3 and memory MEM3, the memory comprising computer program PROGR3 code for controlling the server. The device SERVER may be connected by a wired or wireless network connection, or both, to sources SRC1 and/or SRC2, as well as the viewer devices VIEWER1 and VIEWER2 over the communication interface COMM3.

For viewing and listening the captured or created video and audio content, there may be one or more reproduction devices REPROC1 and REPROC2. These devices may have a rendering module and a display and audio reproduction module, or these functionalities may be combined in a single device. The devices may comprise or be functionally connected to a computer processor PROC4 and memory MEM4, the memory comprising computer program PROG4 code for controlling the reproduction devices. The reproduction devices may consist of a video data stream receiver for receiving a video data stream and for decoding the video data stream, and an audio data stream receiver for receiving an audio data stream and for decoding the audio data stream. The video/audio data streams may be received from the server SERVER or from some other entity, such as a proxy server, an edge server of a content delivery network, or a file available locally in the viewer device. The data streams may be received over a network connection through communications interface COMM4, or from a memory device MEM6 like a memory card CARD2. The reproduction devices may have a graphics processing unit for processing of the data to a suitable format for viewing. The reproduction REPROC1 may comprise a high-resolution stereo-image head-mounted display for viewing the rendered stereo video sequence. The head-mounted display may have an orientation sensor DET1 and stereo audio headphones. The reproduction REPROC2 may comprise a display (either two-dimensional or a display enabled with 3D technology for displaying stereo video), and the rendering device may have an orientation detector DET2 connected to it. Alternatively, the reproduction REPROC2 may comprise a 2D display, since the volumetric video rendering can be done in 2D by rendering the viewpoint from a single eye instead of a stereo eye pair. The reproduction REPROC2 may comprise audio reproduction means, such as headphones or loudspeakers.

It needs to be understood that Fig. 1 depicts one SRC1 device and one SRC2 device, but generally the system may comprise more than one SRC1 device and/or SRC2 device.

The present embodiments relate to providing spatial audio in a 3D scene, such as in the system depicted in Figure 1. In other words, the embodiments relate to volumetric or six-degrees-of-freedom (6-DoF) audio, and more generally to augmented reality (AR) or virtual reality (VR) or mixed reality (MR). AR/VR/MR is volumetric by nature, which means that the user is able to move around in the blend of physical and digital content, and digital content presentation is modified accordingly to user position & orientation.

It is expected that AR/VR/MR is likely to evolve in stages. Currently, most applications are implemented as 3-DoF, which means that head rotation in three axes yaw/pitch/roll can be taken into account. This facilitates the audio-visual scene remaining static in a single location as the user rotates his head.

The next stage could be referred as 3-DoF+ (or restricted/limited 6-DoF), which will facilitate limited movement (translation, represented in Euclidean spaces as x, y, z). For example, the movement might be limited to a range of some tens of centimeters around a location.

The ultimate target is 6-DoF volumetric virtual reality, where the user is able to freely move in an Euclidean space (x, y, z) and rotate his head (yaw, pitch, roll).

It is noted that the term "user movement" as used herein refers any user movement i.e. changes in (a) head orientation (yaw/pitch/roll) and (b) user position performed either by moving in the Euclidian space or by limited head movements.

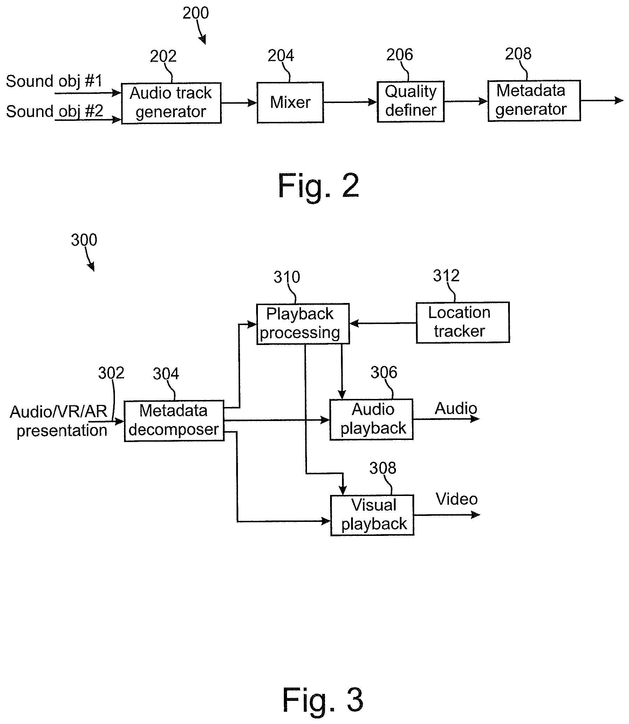

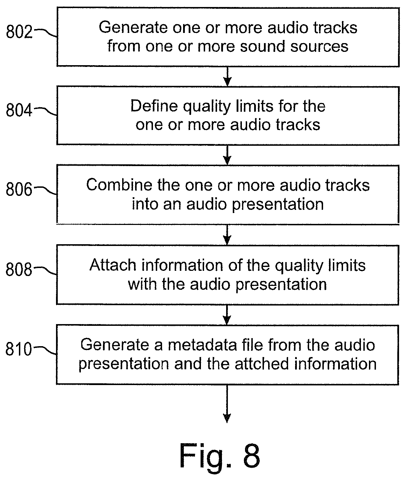

Figure 2 shows an example of some elements of an encoding device 200 in accordance with an embodiment, and Figure 8 shows a flow chart for generating metadata according to an embodiment. The encoding device 200 may be used by producers of audio/VR/AR presentations. There may be an audio track generating element 202 which receives audio signals from one or more sound objects and generates (block 802 in Figure 8) audio tracks from the audio signals. Each audio track may comprise signals from only a single sound object or may be a mixture of two or more sound objects. A mixing element 204 may be used to define how the different audio tracks sound good together. This may include adjusting some properties of one or more audio tracks. A quality definer 206 may be used to define 804 quality limits or other quality related data for playback, wherein a playback device (e.g. the device depicted in Figure 3) may use this information when playing back the audio/VR/AR presentation, as will be described later in this description. The encoding device 200 may further comprise a metadata generating element 208 which includes the audio/VR/AR presentation and the additional information into one or more metadata files for storage and/or transmission to a playback device (blocks 806, 808 and 810 in Figure 8).

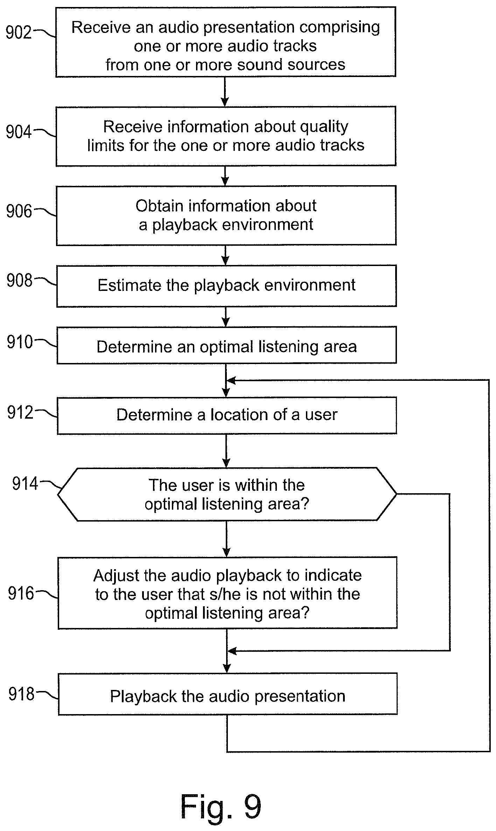

Fig. 3 shows an example of a playback device 300 in accordance with an embodiment, and Figure 9 shows a flow chart for using the metadata by a listener's device according to an embodiment. There is an input 302 for receiving an audio/VR/AR presentation (block 902 in Figure 9) and additional information 904 for example as one or more metadata files. The received information may also include information of the playback environment or the device may obtain it otherwise (block 906) and the playback environment may be estimated 908 to determine 910 an optimal listening area. A metadata decomposer 304 uses the metadata file to extract the audio/VR/AR presentation and the additional information from the metadata file. An audio playback element 306 plays back 918 the audio data, and the visual playback element 308, if present, plays back the visual information, if any, contained by the metadata file. A playback processing element 310 may use the additional information to control 914, 916 the playback for example on the basis of a location of a user 912, as will be explained later in this specification. The location of the user may be detected, for example, by a tracking element 312.

The devices shown in Figures 2 and 3 may operate according to the ISO/IEC JTC1/SC29/WG11 or MPEG (Moving Picture Experts Group) future standard called MPEG-I, which will facilitate rendering of audio for 3DoF, 3DoF+ and 6DoF scenarios. The technology will be based on 23008-3:201x, MPEG-H 3D Audio Second Edition. MPEG-H 3D audio is used for the core waveform carriage (encoding, decoding) in the form of objects, channels, and Higher-Order-Ambisonics (HOA). The goal of MPEG-I is to develop and standardize technologies comprising metadata over the core MPEG-H 3D and new rendering technologies to enable 3DoF, 3DoF+ and 6DoF audio transport and rendering.

In the following, there is provided a more detailed description of some embodiments.

Music producers mix audio typically from individual instrument tracks. Individual tracks are used in particular for 6dof audio where avatars or recorded presentations of the players are visible in virtual reality or augmented reality and the user may walk around them. For 6dof audio the tracks are typically not mixed together for storing or transmitting because spatialized playback of the tracks may be easier if the audio tracks are available separately. However, the producers may still process the audio tracks so that they sound good together. This processing may include setting correct levels, equalization, compression, reverb etc.

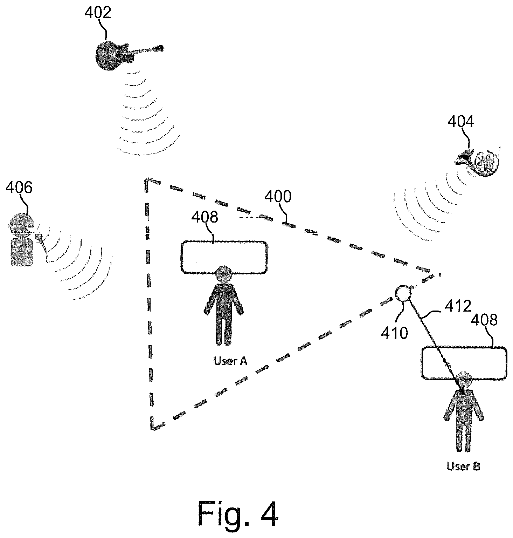

Figure 4 illustrates an example situation in which two users A, B are listening to music and utilizing virtual reality or augmented reality, according to an embodiment. Both users A, B have a head mounted display on their face so that they can see the visual information provided by the virtual/augmented reality system, for example the avatars or the recorded presentations. The dotted line 400 illustrates an area where listening to the audio would not be too disturbed or otherwise worsen quality. This area 40 will also be called as an optimal listening area in this specification. Figure 4 shows examples of audio sources, like a guitar 402, a French horn 404 and a vocalist 406, but it should be noted that these are only examples and in practical situations there may be different kinds of audio sources and different amounts of audio sources than shown in Figure 4.

When the tracks are played back to a user they may be panned, for example with Vector Based Amplitude Panning (VBAP) to loudspeakers or binauralized, for example with Head Related Transfer Functions (HRTFs) for headphone playback. Both of these playback methods use the players' and user's locations in the virtual space, and possibly the VR/AR space acoustic characteristics, and spatialize the tracks accordingly. In some locations the resulting audio to the user may be drastically different from what the producers intended. For example, some instruments may be too loud compared to others or some instruments may have too much or too little low frequencies compared to others. The dotted line 400 in Figure 4 illustrates an area where listening to the audio would not be too disturbed or otherwise worsen quality but outside of this area the audio quality may not be as good as the producers intended. This area 400 will also be called as an optimal listening area in this specification. It should be noted that in practical situations the area may not have sharp boundaries and may not be as regular in shape than the triangle or another regular form but may be more complicated area.

Head Mounted Displays (HMD) are one typical way of using virtual reality and augmented reality content. In the following, the head mounted displays are mainly used as an example of the playback device, but several embodiments are equally applicable to mobile devices, computers i.e. anything that can present user a virtual reality and/or augmented reality world, user's location in it and play audio.

In the following description, location will be used interchangeably with direction and distance. Typically, location is used so that one point is a center point and that gets a coordinate x, y, z = [0,0,0]. The center point is typically in a place where the producers would want the user to start experiencing the content. Direction and distance parameters define other locations with respect to the center point similarly to other location parameters.

Referring again to Figure 4, the user A's head mounted display 408 binauralizes the audio sources to user A. The audio sources in this example are singer 406, guitar 402 and horn 404. It is assumed that the binauralized audio doesn't exceed the limits defined by the producer when the user is in the area which is assumed to be the optimal listening area (OLA) 400. The method of defining the optimal listening area 400 will be presented later. This optimal listening area 400 may be illustrated to the user e.g. with a virtual fence, or with different colours, or the optimal listening area 400 being visually sharper and areas outside the optimal listening area 400 being visually blurred etc. In the example of Figure 4 the user B is outside the optimal listening area 400 and if the audio sources were binauralized to him normally, the resulting audio might differ too much from what the producer(s) desire. Therefore, instead of using normal binauralization, the head mounted display 408 of user B binauralizes the audio as if the user were located in the closest point in the optimal listening area 400. Alternatively the head mounted display may attenuate or amplify the binauralized signal relative to the difference in two distances where the first distance is from the user B to the closest point 410 in the optimal listening area 400 and the second distance is from the user B to the closest sound source or some other sound source or a center point of the sound sources calculated as the mean of the coordinates of the sound sources. Additionally, the head mounted display 408 attenuates the binauralized signal relative to the distance from user B to the closest point 410 in optimal listening area 400. The distance from user B to the closest point 410 is illustrated with the line 412 in Figure 4. Also, other methods than attenuation may be used, adding reverberation, attenuating more high frequencies than low frequencies, attenuating one or more frequency ranges more than other frequency ranges, making the sound more ambient etc. In this way, regardless of the user's position audio may be binauralized so that it is within the limits defined by the producer(s).

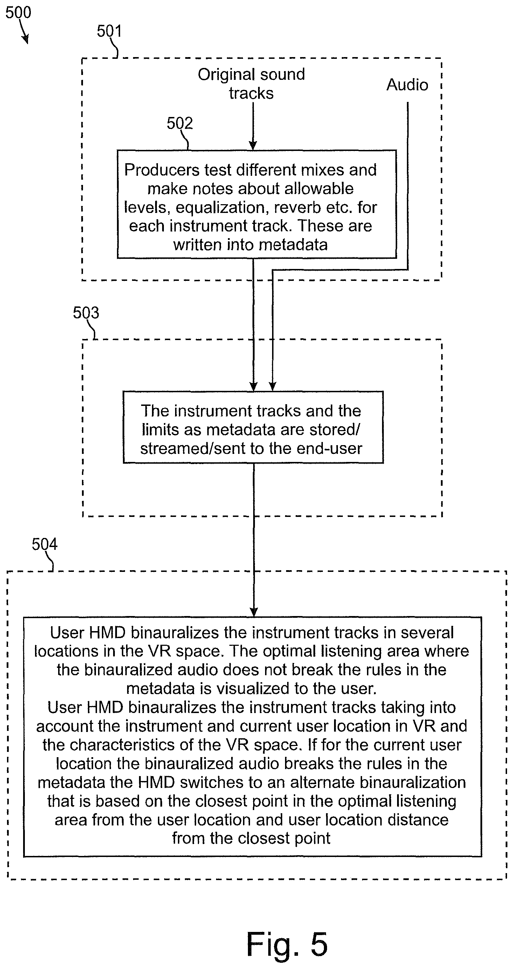

Figure 5 is a simplified block diagram of a system 500. Block 501 illustrates a metadata generating element, which may belong to a device of one or more producers and may include software and hardware appropriate for such purpose. The metadata generating element 501 may receive audio tracks containing audio information (tracks) of original instruments and/or vocalists. For example, audio recordings of each original instrument and vocalist (singer) which have taken part of a music recording may be provided in a separate audio track. However, it may also be possible that audio of more than one instrument and/or vocalist may be included in the same audio track. The received audio tracks may be tested using different settings for mixing, for example, and the producer may make notes about allowable levels, equalization, reverb etc. for each audio track. The metadata generating element 501 may comprise an information input element 502 which the producer may use to indicate the allowable levels, equalization, reverb etc. for each audio track. The metadata generating element 501 receives the input information and generates metadata for the audio tracks accordingly. The metadata may be stored and/or encoded into a bitstream and transmitted to an end user, for example.

The producer may also use a model of a room or other space which may be used as the virtual reality or augmented reality environment in the playback. This model may also be called as a playback environment. The model of the space may include information about audio properties of the space. For example, the model comprises a room response of the space which indicates how different parts of the space react to different frequencies or frequency ranges. As an example, the space may comprise walls or other obstacles which attenuate some frequency ranges more than some other frequency ranges and/or walls or other obstacles which reflect some frequency ranges better than some other frequency ranges. Reflections/attenuations affect the "colour" and echo of the sound, wherein in some areas in the space the audio may become too bad in quality. The echo may be caused, for example, multi-path propagation of sound waves. Such multi-path propagation may exist when sound waves from an audio source does not only arrive directly from the source to the listener but also reflected from a wall or another obstacle, wherein the reflected waves have longer path to travel than the directly propagated waves. Hence, the reflected waves arrive later than the directly propagated wave to the listener's ear. Therefore, the room response may have effect on the optimal listening area 400 and using different room models may lead to different optimal listening areas 400.

The audio objects which comprise the actual audio information (audio tracks) and possibly video objects which comprise the actual video information (video tracks) may also be stored and/or encoded into a bitstream and transmitted to the end user. The encoded metadata and the audio/video tracks may be transmitted in the same bitstream or separately.

Block 503 illustrates a transmission channel with audio/video and metadata encoding, transmission, and audio/video and metadata decoding.

Block 504 illustrates a user's device such as a head mounted display 408 in which the received audio/video tracks and the metadata are decoded and used to reconstruct the audio to headphones of the head mounted display 408, to reconstruct the video to the display(s) of the head mounted display 408 and also to take into account the other information contained in the received bitstream to be used in e.g. binauralization and reconstruction of the virtual/augmented reality.

The audiovisual data and metadata may be transmitted in a file or stream. The file may be divided into frames that each are, for example, 20ms long. An example of such a file structure is given in Table 1. In frame 3 a new sound object is introduced, therefore the producers limits for that object shall be introduced in that frame.

**Table 1: Example of frame contents in a transmitted file**

| | |
|---|---|
| Frame 1 | File format metadata |
| | Visual data |
| | Visual metadata |
| | Producer limits for sound object 1 |
| | |
| | Room geometry |
| | |
| | Sound object 1 |
| | Sound object 1 metadata |
| Frame 2 | Visual data |
| | Visual metadata |
| | Sound object 1 |
| | Sound object 1 metadata |
| Frame 3 | Visual data |
| | Visual metadata |
| | Producer limits for sound object 2 |
| | |
| | Sound object 1 |
| | Sound object 1 metadata |
| | Sound object 2 |
| | Sound object 2 metadata |
| Frame 4 | Visual data |
| | Visual metadata |
| | Sound object 1 |
| Frame 1 | File format metadata |
| | Visual data |
| | Visual metadata |
| | Producer limits for sound object 1 |
| | Room geometry |
| | Sound object 1 |
| | Sound object 1 metadata |
| Frame 2 | Visual data |
| | Visual metadata |
| | Sound object 1 |
| | Sound object 1 metadata |
| Frame 3 | Visual data |
| | Visual metadata |
| | Producer limits for sound object 2 |
| | Sound object 1 |
| | Sound object 1 metadata |
| | Sound object 2 |
| | Sound object 2 metadata |
| Frame 4 | Visual data |
| | Visual metadata |
| | Sound object 1 |
| | Sound object 1 metadata |
| | Sound object 2 |
| | Sound object 2 metadata |

In the following, more detailed information of some fields of the frame of Table 1 will be provided.

File format metadata may include a bit indicating that this file has producer set limits.

Visual data is the visual information.

Visual metadata may include information on how the optimal listening area 400 is visualized to the user.

Producer limits for sound object 1/sound object 2 comprises description of the type of limits e.g. a number that maps to the type of limits, in this example decibel limits of maximum sound energy difference in octave bands. For example, there may be 10 numbers that describe the maximum energy difference in octave bands.

Room geometry may comprise information about the room model, such as start and end locations of walls in x, y, z coordinates and a reflection coefficient of each wall. The reflection coefficient is, for example, a number between zero and one. The value one may indicate total reflection and the value zero may indicate total absorption, or vice versa.

Sound object 1/sound object 2 is the actual sound data (audio track) of the sound object #1/sound object #2.

Sound object 1 metadata comprises e.g. sound object location coordinates. This may be time varying, e.g. a new number every 20ms.

Table 2 provides more detailed information of contents of one frame in accordance with an embodiment.

**Table 2: A more detailed example of one frame contents**

| Frame 1...N | Data object | | Data type | Number bits (use 0 if optional) | Description |
|---|---|---|---|---|---|
| | File formatOther metadata | metadata | String and binary | 1...N | Typically, bitrate, framerate, sampling rate, language, copyright, number of tracks etc. |
| | | Producer limits present | Binary | 1 | Indication that this file has producer set limits e.g.:[0=yes, 1 =no] |
| | Visual data | | Binary | 1...N | Not in the scope of this invention but e.g. H.264 bitstream |
| | Visual metadata | | String and binary | 1...N | Not in the scope of this invention but typically, bitrate, framerate etc. |
| | Room geometry | Room geometry present | Binary | 1 | Indication that this file has room geometry |
| | | Number of walls | Unsigned Integer | 16 | Number of triangle shaped walls specified in this file |
| | | Wall corner locations | Vector of signed integers, length = 3*3*"Number of walls" | 9*16 | Locations of wall triangle corners in x, y, z coordinates |
| | | Reflection coefficients | Vector of unsigned integers, length = "Number of walls" | 9*16 | Each wall reflection coefficient, a number between zero and one. The number is represented as an integer between 0 and 2^16-1 where 0 represents zero and 2^16-1 represents one. |
| | Sound object 1 | | Binary | 1...N | Typically AAC encoded data |
| | Sound object metadata | 1generic metadata | String and binary | 0 | Typically, bitrate, sampling rate, language, etc. |
| | | location metadata | Three signed integers | 3*16 | Sound object location coordinates. This is time varying e.g. may change in every frame. |
| | Producer for soundlimits object 1 | limitsProducer present for this object | Binary | 1 | Indication that this object has producer set limits e.g.:[0=yes, 1=no] |
| | | Type of limits | Unsigned integer | 16 | A number that maps to the type of limits, for example [1=dB limits in octave bands, 2=dB limits in 3rd octave bands, 3=amount of reverberation, etc.] |
| | | Limits | Vector of signed integers, length depends, for "Type of limits"=1 - > length=10 | 10*16 | 10 numbers that describe the maximum energy difference in octave bands. The number is represented as an integer between -2^15-1 and +2^15-1 where 0 represents zero, -2^15-1 represents -30dB, and +2^15-1 represents +30dB. (other values than 30dB may also be used) |

In the following, some examples of transmitting the producers' limits to the user's head mounted display 408 will be described.

The head mounted display 408 may have a fixed table of limits. No metadata needs to be sent from the producers to the head mounted display 408. The head mounted display 408 compares the original track characteristics to the binauralized signal characteristic in several locations in VR/AR and if the difference is within the limits in the table, then that location belongs to the optimal listening area 400, otherwise it doesn't. The optimal listening area 400 can then be illustrated to the user as the union of the locations where limits weren't exceeded.

In accordance with another embodiment, the table is created by the producers and sent to the head mounted display 408 as metadata, for example using the frame format of Tables 1 and 2 presented above, otherwise the functionality is as above.

The table of limits may contain items such as:

**Table 3: Examples of audio characteristics that shouldn't be changed more than producer's desired limits**

| **Item name** | **Item description** | **Example value** |
|---|---|---|
| Level | Maximum level difference | At most 10dB |
| Equalization | Maximum level difference in frequency bands | At most 6dB |
| Compression | Difference between the difference of loudest and most quiet time frame | At least 30dB |
| Reverb | Difference in the amount of reverberation | At most 0.5 sec |

The reverberation time from music signals can be calculated using for example by analysing the slope of delay of the reverberant tail of the room impulse response. The reverberation time from music signals can also be calculated using, for example, a method disclosed in "Fast algorithms for blind estimation of reverberation time" by R. Ratnam; D.L. Jones; W.D. O'Brien, IEEE Signal Processing Letters (Volume: 11, Issue: 6, June 2004

User's head mounted display 408 receives the bitstream that producers have made. User's head mounted display may start parsing the bitstream bit by bit and may go through it until the head mounted display 408 comes to the bit that indicates whether producers' limits are present. If the bit indicates that the producers' limits are present, the head mounted display may then continue to parse the bitstream until it has found out sound object locations, room geometry, and producers' limits.

The head mounted display 408 may then test, for example with white noise, how audio from sound object locations is modified by the VR room, HRTFs, VR reverberations and other sound processing in multiple possible user positions (and possible orientations). This audio is not played back to the user. The head mounted display 408 then compares the tested sound to the producers' limits. The head mounted display starts to play back VR audio and video. Those locations where the test sound is within the limits may be indicated to the user in VR with a visualization e.g. as a coloured border. Very small green areas may be omitted from showing to the user even if they are used in audio processing.

Instead of or in addition to the visual border, the optimal listening area may be indicated visually so that those regions which are within the optimal listening area are shown sharper and/or in colours, whereas areas outside the optimal listening area may be shown blurred and/or without colours (i.e.as a black-and-white image).

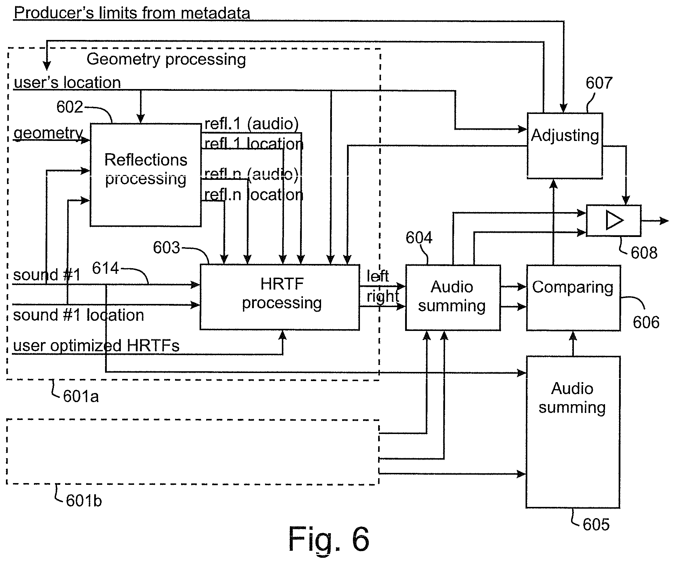

Figure 6 illustrates as a simplified block diagram how the user's head mounted display may process sound. Block 601a illustrates room geometry processing elements for sound object #1 and Block 601b illustrates room geometry processing elements for sound object #2. It should be noted that these elements need not be separate but it may also be possible that the same elements will be used for processing each sound object. It may also be possible that there will be more than two (or only one) sound objects wherein there may be separate elements 601 for each sound object or there may be less elements 601 (e.g. only one) than the amount of sound objects, wherein one element processes information of more than one sound object.

In the geometry processing block 601a room geometry information is provided to a reflections processing block 602. The reflections processing block 602 also receives sound object #1, possibly as a mono signal, and information about the location of the sound object #1. Furthermore, the user's current location is input to the reflections processing block 602. The reflections processing block 602 uses the received information to determine or calculate possible reflections of sound waves from the sound object #1, and to determine or calculate the location(s) of the room where such reflections will occur. Information on the reflections and the location of the reflections are provided to a HRTF processing element 603. The HRTF processing element 603 also receives sound object #1, information about the location of the sound object #1 and possibly also user's optimized head related transfer functions. The user's optimized head related transfer functions may be based on predetermined models from which a best matching model may have been selected, or actual measurements of the user's head, or they may have been defined manually. The HRTF processing element 603 also receives information of the reflections determined by the reflections processing block 602. The HRTF processing element 603 uses the received information and generates audio signals, which may be mono or stereo signals i.e. generates left and right audio signals. These audio signals are processed by a first summing element 604 which sums audio signals of different sound objects. For example, if there are two sound objects, such as the sound object #1 and the sound object #2, the first summing element 604 sums HRTF processed left audio signals of the sound object #1 and HRTF processed left audio signal of the sound object #2 to be used as a HRTF processed left audio signal. Similarly, the first summing element 604 sums HRTF processed right audio signals of the sound object #1 and HRTF processed right audio signal of the sound object #2 to be used as a HRTF processed right audio signal.

There is also a second summing element 605 which sums direct audio signals from the sound objects #1, #2. These signals may be mono signals. The sum of direct audio signals (mono), the sum of HRTF processed left audio signal and the sum of HRTF processed right audio signal are provided to a comparison element 606. The comparison element 606 compares the sum of HRTF processed left audio signal with the sum of direct audio signals to determine differences between these signals. Correspondingly, the comparison element 606 compares the sum of HRTF processed right audio signal with the sum of direct audio signals to determine differences between these signals. The results of these comparisons are provided to an adjusting element 607.

The adjusting element 607 determines whether the difference between the sum of direct audio signals and either or both of the HRTF processed left audio signal and the HRTF processed right audio signal is greater than a predetermined limit, the adjusting element 607 may output control information to the HRTF processing element 603 to use different head related transfer functions. In a situation in which only one of the HRTF processed left/right audio signals deviates too much from the determined value, only that head related transfer function may be changed.

Instead of or in addition to changing the head related transfer functions, the adjusting element 607 may use a different location for the user (although the actual location of the user were not changed), for example such a location which is nearest to the user and within the optimal listening area 400. In Figure 4 this location is exemplified with the dot 410 and the distance between that location and the user B's actual location is illustrated with the arrow 412.

The adjusting element 607 may further determine gain for the audio signals which may depend on the distance between the actual user's location and the nearest location with the optimal listening area, when the user is not within the optimal listening area. Information of the determined gain is provided to an amplifier 608. The amplifier 608 may use this information to adjust amplification (gain) of the amplifier 608. The gain parameter may be separate for both left and right audio channels. Output of the amplifier 608 may be provided to headphones of the head mounted display, or loudspeakers when they are being used.

In the example above the output audio is a sum of audio objects and their reflections processed with HRTFs for headphone playback. The playback system calculates the user output audio in several locations that may span the whole "room" or listening area. Those locations where the output audio is not more different from a reference than the producers' limits are included in the optimal listening area 400. The output audio is compared to the sum of the original objects and if the difference is too big in current user location, the user location is changed to the nearest known location where output audio is not too different, and the output audio is attenuated. The actual user location in the virtual world is not changed, only the location for calculating the audio is changed.

The comparison may also be done for each of the sound objects separately. In the example of Figure 4 that would mean that the audio signal of the guitar 402 would be compared to a first reference provided e.g. by the producer for the guitar and if the difference exceeds a predermined first limit at some location(s), that location or those locations will be excluded from the optimal listening area 400. Similar procedure may be performed for the other audio sources such as the horn 404 and the vocalist 406. In the comparisons the references may be the same as the first reference or each audio source may have its own reference. The same applies to the predetermined limits, i.e. the limits may be the same for each audio object or for each audio object an individual limit may be defined.

The metadata may also contain limits for the difference in playback of different sound objects. In other words, one sound object (e.g. the object A) may not be more than a certain value (e.g. 10dB) louder than another sound object or objects (e.g. the sound object B).

In some examples the system calculates the optimal listening area 400 beforehand and therefore doesn't need to change it unless the producers' limits change in the metadata or if at least one of the audio objects changes or moves. Beforehand calculation may be necessary if the optimal listening area 400 is visualized to the user. In some other examples the comparison is done on the fly every time the user location changes or the producers' limits or the audio objects change or their location changes. Typically, this could be done quite often, e.g. every 20ms.

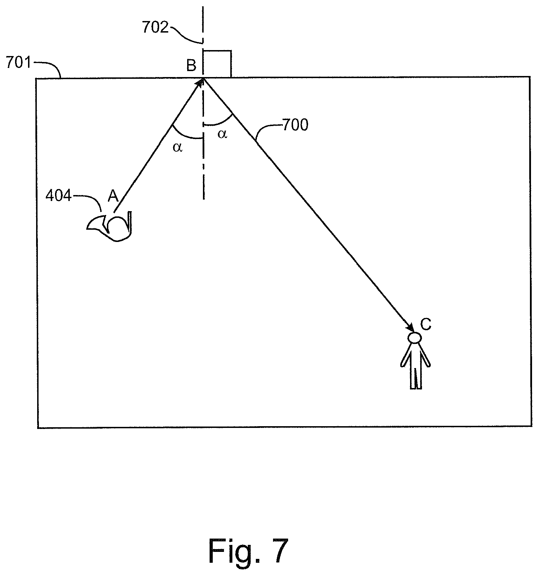

Many different known methods can be used for calculating the reflections. One is presented in Figure 7.

In Figure 7 reflection processing is presented for one sound source 404 and one reflection 700. In practice, there would be more than one reflection. In addition to the direct sound processing (the direct line 614 from the sound object to the HRTF processing block in the block diagram 6), reflections of the sound object may be processed as follows: Sound reflects from a wall 701 so that the angle α between the direction of arrival from the sound source 404 and a surface normal 702 of the wall 701 is the same than the angle α between the direction of reflection from the wall 701 and the surface normal 702 of the wall 701. Sound reflection can now be processed as if there were a new sound object in location B. However, it may be an attenuated version of the original sound object. Location B can be calculated from room geometry and user and sound object locations using elementary mathematics. The new sound object may be attenuated from the original by a value that is relative to the distance from A to C through B. In accordance with an example, the value is between 0 and 1 and can be calculated using methods for sound attenuation when it travels in air. Often for normal sized rooms a fixed value 1 may be used. In addition, it may be attenuated by a wall dependent reflection coefficient that is set by when structures in the virtual world are constructed. In accordance with an example, also this coefficient is a number between 0 and 1.

In accordance with an example, the above-mentioned head related transfer function processing takes in a mono audio signal and its direction relative to the user head. HRTFs are a set of filters, two filters for each direction, one for a left ear and the other for a right ear. There may be tens or hundreds of directions available in a HRTF set. The audio signal direction is rounded to the nearest direction available in the HRTF set and those two filters are used to filter the audio signal. The audio signal filtered with the left ear filter is played to the user using left headphone speaker and the audio signal filtered with the right ear filter is played to the user using right headphone speaker. With multiple sources and their reflections each is filtered with correct left and right HRTF, left ear results are summed together and right ear results are summed together, and the summed signals are played to the user.

Comparing the original object audio signals to the playback signal may be done by comparing the sum of all the mono audio object signals to each of the channels in the playback signal. In Figure 6 the playback signal is binauralized headphone signal with two channels and thus the comparison is done between the first channel of the binauralized signal and the summed object audio signal and between the second channel of the binauralized signal and the summed object audio signal. In some other examples the playback may be other type of signals with more tracks and the comparison would be done between the summed object audio signal and all the tracks. If any track of the playback signal differs too much from the sum, then the system may modify its audio playback. The limits to how much the audio signals can differ may be written to the metadata by the producers. Many different types of comparisons may be performed. Examples include: how much audio level in frequency bands differs from the average level and how different reverberation levels audio signals have.

In some examples, instead of comparing the sums individual audio objects may be compared after the HRTF and reflections processing to original objects. In this way the system may determine if the average levels of the original objects compared to each other are similar to those of the processed objects. This may prevent one object getting too loud or quiet compared to other objects in the playback signal. In some examples the producers make an example binauralization of the tracks and send it in the file. The head mounted display compares its own binauralization against the example and creates optimal listening area 400.

If the difference in Figure 7 is too much then audio playback is modified. This means that instead of the current user location in VR a known good audio quality location is used except that audio from that location is attenuated. The attenuation may be dependent on the distance from the actual user location and the location used for audio calculation. Other distances may also be used like the difference in distance from the actual user location to the geometric mean location of the sound objects and the distance from the user location used for audio calculations to the geometric mean location of the sound objects.

In some examples, instead of comparing the playback audio to the original audio objects the playback audio may be compared to playback audio from a reference location. The reference location may be transmitted as metadata in the bitstream.

The optimal listening area 400 may be determined by the user device (HMD) in the following manner: The head mounted display compares the transmitted track characteristics to the binauralized signal characteristic in several locations in VR/AR and if the difference is within the limits in the table, then that location belongs to the optimal listening area 400, otherwise it doesn't. The optimal listening area 400 can then be illustrated to the user as the union of the locations where limits weren't exceeded. User benefits from the illustration so that he knowns where is the optimal area where music has been rendered in a way that takes into account the AR/VR space virtual acoustics and yet the music doesn't deviate too much from the producer desired experience. The optimal listening area may be determined by the producers and transmitted as metadata in the bitstream.

For loudspeaker playback, instead of binauralization panning may be used and the output may be provided to loudspeakers. Otherwise, the process may be the same. Loudspeaker systems may also utilize wavefield synthesis in which a large number of loudspeakers are used, e.g. tens of loudspeakers.

The audio tracks may be split into frequency bands and the limits may be different for each frequency band. This is in particular because HRTF processing attenuates some frequency bands more based on sound direction and in those frequency bands the limits may need to have more leeway.

Instead of having each instrument on a separate track the tracks may be combined for storing and transmission using e.g. MPEG Spatial Audio Object Coding (SAOC) which as a format allows instrument tracks to be separated after the combination to a sufficient degree.

The above described procedures may also be applied to only some of the audio tracks but not all of them. For example, the producers may set limits for band instrument tracks and singer track but not for other tracks e.g. sound object in the background: car, audience, members of audience.

In some embodiments the user is shown visually the optimal listening area 400, whereas in some other embodiments the user is not shown visually.

In accordance with an example, HRTFs are used to modify audio signals for headphone playback. HRTFs typically attenuate (or amplify) signal in frequency bands, change delay and change the phase response of the audio. One aspect of these is the attenuation although other characteristics may also be used. HRTFs are direction dependent in the sense that a different HRTF from a set of HRTFs is used depending on the direction (and sometimes distance) of the audio with respect to the user.

In many systems users can input their own typically measured or modelled HRTS to individualize audio playback for them e.g. MPEG-H. The methods to measure or model HRTFs are well known. A problem with these methods is that they can be quite unreliable and the resulting HRTFs may produce low quality audio. One typical problem is that low frequencies are attenuated too much.

The above presented methods may overcome the problem so that the producers set limits in the transmitted bitstream as metadata that describes the amount by which the transmitted audio may be attenuated in frequency bands. If the user HRTFs exceed that in some direction(s), those directions may be replaced by a standard HRTF or the exceeding attenuation is limited to that indicated by the producers in the metadata. Comparison is done by comparing the user HRTFs directly to a set of reference HRTFs and if the difference is bigger than that stated by the producers in metadata, the system may not allow the user to use his own HRTFs.

In an alternative example user HRTFs are used and the output audio is compared to the original audio object signals. The used set of HRTFs may be changed if the output is too different. Alternatively, the size of the optimal listening area 400 may be calculated by comparing the output audio to the original audio objects in a number of locations that may be predetermined by the producers and if the output audio is too different from the original objects in too many places then the system doesn't allow the user to use his own HRTFs.

The room parameters (geometry, room response, etc.) may be obtained e.g. by simulating a room and using a grid (a matrix of points) to represent locations in the room at which room parameters will be determined. The room parameters and information on the grid may be stored into the metadata and transmitted to the listener when s/he listens the audio recording. The receiving device may use the metadata to determine the optimum listening area if that area is not defined by the recorder before transmitting the metadata and sound data.

In a real listening situation the listener's device may operate e.g. as follows. The listener selects the audio recording for listening. The recording may also be attached with video information for virtual/augmented reality playback. The location and the movements of the user may be detected by sensors in the head mounted display or by other means external to the head mounted display. The device determines the location in the virtual environment and may show the user's actual location and the optimal listening area. The user may move within the room and the device updates the user's location. If the user is exiting the optimal listening area, the sound signals may be amended so that the user detects that s/he has exceeded the optimal listening area, wherein the user may move back to the optimal listening area. Also if the user is approaching a real or virtual wall or other obstacle in the room, the device may alter the generated audio signals to alarm the user that s/he should not move forward. It may also be possible that the user is warned visually about such situations.

The room parameters (geometry, room response) may also be obtained by measuring a real room at different locations e.g. so that white noise is, possibly omnidirectionally, generated e.g. by a set of loudspeakers at a point which is assumed to be an optimum listening point. Microphones may then be used at different locations to capture audio signals on these locations. The captures audio signals may then be examined to determine the room response at the measured locations.

The actual room or other space may be quite large, e.g. a church, but the user should only stay within a relatively small area within the large space. Then, the whole space may not be analysed but only the smaller area and possibly some areas around that.

Using the approaches presented above may provide some advantages. For example, music producers can control user music experience, a user may always get an optimal music experience, and the user sees the area where he may get optimal experience.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings.

## Claims

1. A method for playing back audio in a virtual reality or augmented reality according to a location of a playback device wore by a user and to the locations of at least a first sound object and second sound object, the method comprising:
receiving by a playback device (300) an audio presentation comprising a first audio track and a second audio track and a metadata file comprising information regarding quality limits related to sound related audio properties of the first audio track and the second audio track for playback of the first audio track and the second audio track;
obtaining information about a model of a space to be used as a virtual reality or augmented reality playback environment;
using the model of the space to determine an optimal listening area within the virtual reality or augmented reality environment by using information of the metadata file regarding the quality limits;
determining a location of the playback device;
comparing the location of the playback device with the optimal listening area;
and
examining whether the location of the playback device is within the optimal listening area; and
if the playback device (300) is within the optimal listening area, binauralizing the first audio track and the second audio track to form a binauralized signal so that the binauralized signal does not exceed the quality limits; and
when the playback device (300) is outside the optimal listening area, providing an indication to the user whether the playback device is outside the optimal listening area, and adjusting the binauralization as if the playback device was located in a location of the optimal listening area (400) closer to the location of the playback device (300).

2. The method according to claim 1, wherein the adjusting comprises one or more of the following:
attenuating the binauralized signal;
amplifying the binauralized signal;
adding reverberation to the binauralized signal;
attenuating more high frequencies than low frequencies;
attenuating one or more frequency ranges more than other frequency ranges;
making the sound more ambient;
modifying the binauralized signal relative to the difference between a first distance from the playback device (300) to said location of the optimal listening area (400) closer to the location of the playback device and a second distance from the playback device (300) to a closest sound source or another sound source or a center point of sound sources calculated as a mean of the coordinates of the sound sources.

3. The method according to claim 1 or 2, wherein the audio presentation is received from an encoding device arranged to generate metadata for an audio presentation in a virtual reality or augmented reality in respect to at least a first sound object and a second sound object, wherein the method carried out by the encoding device comprises
generating a first audio track from sound signals from the first sound object;
generating a second audio track from sound signals from the second sound object;
defining whether the first audio track and the second audio track sound good together by adjusting at least some properties of the first audio track and the second audio track;
defining quality limits related to sound related audio properties of the first audio track and the second audio track for playback of the first audio track and the second audio track;
combining the first audio track and the second audio track into an audio presentation;
attaching information regarding the quality limits with the audio presentation;
generating a metadata file from the information regarding the quality limits and the audio presentation; and
transmitting the metadata file to the playback device.

4. A playback device comprising:
means for receiving an audio presentation comprising a first audio track and a second audio track and a metadata file comprising information regarding quality limits related to sound related audio properties of the first audio track and the second audio track for playback of the first audio track and the second audio track;
means for obtaining information about a model of a space to be used as a virtual reality or augmented reality playback environment;
means for using the model of the space to determine an optimal listening area within the playback environment by using information of the metadata file regarding the quality limits;
means for determining a location of the playback device;
means for comparing the location of the playback device with the optimal listening area;
means for examining whether the location of the playback device is within the optimal listening area;
means for binauralizing configured to form the binauralized signal so that it does not exceed the quality limits if the playback device (300) is within the optimal listening area; and
means for providing, if the playback device is outside the optimal listening area, an indication to the user;
wherein the means for binauralizing are configured to adjust the binauralized signal as if the playback device was located in a location of the optimal listening area (400) closer to the location of the playback device (300).

5. The apparatus according to claim 4, wherein the means for binauralizing are configured to adjust the binauralized signal by one or more of the following:
attenuating the binauralized signal;
amplifying the binauralized signal;
adding reverberation to the binauralized signal;
attenuating more high frequencies than low frequencies;
attenuating one or more frequency ranges more than other frequency ranges;
making the sound more ambient;
modifying the binauralized signal relative to the difference between a first distance from the playback device (300) to said location of the optimal listening area (400) closer to the location of the playback device and a second distance from the playback device (300) to a closest sound source or another sound source or a center point of sound sources calculated as a mean of the coordinates of the sound sources.

6. The apparatus according to claim 4 or 5, wherein said means for obtaining information about the model of the space comprising:
means for obtaining information of a room response of the playback environment indicative of how different parts of the room react to different frequencies or frequency ranges; and
means for using the room response to determine the optimal listening area.

7. The apparatus according to claim 6, further comprising at least the following:
means for obtaining the information of the model of the space from the metadata file.

8. The apparatus according to any of the claims 4 - 7, further comprising means for generating said indication by:
means for adjusting a sound level of at least one of the first audio track and the second audio track; and
means for providing a visual indication of the location of the user with respect to the optimal listening area.

9. The apparatus according to claim 8, wherein said means for providing the visual information of the optimal listening area further comprising at least one of the following:
means for representing details within the optimal listening area sharper as details outside the optimal listening area;
means for representing details within the optimal listening area with different colours as details outside the optimal listening area;
means for representing details within the optimal listening area as coloured image and details outside the optimal listening area as a black-and-white image;
means for representing the optimal listening area as a curve.

10. The apparatus according to claim 9, further comprising at least the following:
means for examining whether the audio presentation is attached with information about the model of the space; and
means for using the received information about the model of the space to determine the optimal listening area, if the audio presentation is attached with information about the model of the space.

11. The apparatus according to any of claims 4 - 10, wherein the audio presentation is received from an encoding device arranged to generate metadata for an audio presentation in a virtual reality or augmented reality in respect to at least a first sound object and a second sound object, wherein the encoding device comprises
means for generating a first audio track from sound signals from a first sound object;
means for generating a second audio track from sound signals from a second sound object;
means for defining whether the first audio track and the second audio track sound good together by adjusting at least some properties of the first audio track and the second audio track;
means for defining quality limits related to sound related audio properties of the first audio track and the second audio track for playback of the first audio track and the second audio track;
means for combining the first audio track and the second audio track into an audio presentation;
means for attaching information regarding the quality limits with the audio presentation ;
means for generating a metadata file from the information regarding the limits and the audio presentation; and
means for transmitting the metadata file to the playback device.

12. The apparatus according to claim 11, wherein the encoding device further comprises:
means for providing a room model to be used as a virtual reality or augmented reality in playback of the audio presentation; and
means for using the room model and the quality limits to define an optimal listening area for playback of the audio presentation.

13. The apparatus according to claim 12, wherein the encoding device further comprises:
means for including information of the optimal listening area in the metadata file.

## Patentansprüche

1. Verfahren zum Wiedergeben von Audio in einer virtuellen Realität oder einer erweiterten Realität gemäß einem Ort einer Wiedergabevorrichtung, die von einem Benutzer getragen wird, und den Orten von mindestens einem ersten Klangobjekt und einem zweiten Klangobjekt, wobei das Verfahren Folgendes umfasst:
Empfangen einer Audiopräsentation, die eine erste Audiospur, die aus Klangsignalen vom ersten Klangobjekt erzeugt wird, und eine zweite Audiospur, die aus Klangsignalen vom zweiten Klangobjekt erzeugt wird, sowie eine Metadatendatei umfasst, die Informationen über Qualitätsgrenzwerte umfasst, die sich auf klangbezogene Audioeigenschaften der ersten Audiospur und der zweiten Audiospur beziehen, zur Wiedergabe der ersten Audiospur und der zweiten Audiospur durch eine Wiedergabevorrichtung (300);
Erhalten von Informationen über ein Modell eines Raums, der als eine Wiedergabeumgebung für eine virtuelle Realität oder eine erweiterte Realität zu verwenden ist;
Verwenden des Modells des Raums, um unter Verwendung der Informationen der Metadatendatei über die Qualitätsgrenzwerte einen optimalen Hörbereich in der Umgebung der virtuellen Realität oder der erweiterten Realität zu bestimmen;
Bestimmen eines Ortes der Wiedergabevorrichtung;
Vergleichen des Ortes der Wiedergabevorrichtung mit dem optimalen Hörbereich; und
Überprüfen, ob sich der Ort der Wiedergabevorrichtung im optimalen Hörbereich befindet; und
wenn sich die Wiedergabevorrichtung (300) im optimalen Hörbereich befindet, Binauralisieren der ersten Audiospur und der zweiten Audiospur, um ein binauralisiertes Signal zu bilden, derart, dass das binauralisierte Signal die Qualitätsgrenzwerte nicht überschreitet; und
wenn sich die Wiedergabevorrichtung (300) außerhalb des optimalen Hörbereichs befindet, Bereitstellen einer Anzeige für den Benutzer, ob sich die Wiedergabevorrichtung außerhalb des optimalen Hörbereichs befindet, und Anpassen der Binauralisierung, als wenn sich die Wiedergabevorrichtung an einem Ort des optimalen Hörbereichs (400) befinden würde, der dem Ort der Wiedergabevorrichtung (300) näher ist.

2. Verfahren nach Anspruch 1, wobei das Anpassen eines oder mehreres von Folgendem umfasst:
Abschwächen des binauralisierten Signals;
Verstärken des binauralisierten Signals;
Hinzufügen von Nachhall zum binauralisierten Signal;
Abschwächen von mehr hohen Frequenzen als tiefen Frequenzen;
stärkeres Abschwächen von einem oder mehreren Frequenzbereichen als von anderen Frequenzbereichen;
Gestalten des Klangs mit mehr Raumcharakter;
Modifizieren des binauralisierten Signals relativ zur Differenz zwischen einem ersten Abstand von der Wiedergabevorrichtung (300) vom Ort des optimalen Hörbereichs (400), der dem Ort der Wiedergabevorrichtung näher ist, und einem zweiten Abstand von der Wiedergabevorrichtung (300) von einer nächsten Klangquelle oder einer anderen Klangquelle oder einem Mittelpunkt von Klangquellen, der als Mittelwert der Koordinaten der Klangquellen berechnet ist.

3. Verfahren nach Anspruch 1 oder 2, wobei die Audiopräsentation von einer Codiervorrichtung empfangen wird, die angeordnet ist, Metadaten für eine Audiopräsentation in einer virtuellen Realität oder einer erweiterten Realität mit Bezug auf mindestens ein erstes Klangobjekt und ein zweites Klangobjekt zu erzeugen, wobei das von der Codiervorrichtung umgesetzte Verfahren Folgendes umfasst
Erzeugen einer ersten Audiospur aus Klangsignalen vom ersten Klangobjekt;
Erzeugen einer zweiten Audiospur aus Klangsignalen vom zweiten Klangobjekt;
Definieren, ob die erste Audiospur und die zweite Audiospur zusammen gut klingen, durch Anpassen von mindestens einigen Eigenschaften der ersten Audiospur und der zweiten Audiospur;
Definieren von Qualitätsgrenzwerten, die sich auf klangbezogene Audioeigenschaften der ersten Audiospur und der zweiten Audiospur beziehen, zur Wiedergabe der ersten Audiospur und der zweiten Audiospur;
Kombinieren der ersten Audiospur und der zweiten Audiospur zu einer Audiopräsentation;
Beifügen von Informationen über die Qualitätsgrenzwerte zur Audiopräsentation;
Erzeugen einer Metadatendatei aus den Informationen über die Qualitätsgrenzwerte und der Audiopräsentation; und
Übertragen der Metadatendatei zur Wiedergabevorrichtung.

4. Wiedergabevorrichtung, die von einem Benutzer getragen wird und Folgendes umfasst:
Mittel zum Empfangen einer Audiopräsentation, die eine erste Audiospur und eine zweite Audiospur sowie eine Metadatendatei umfasst, die Informationen über Qualitätsgrenzwerte umfasst, die sich auf klangbezogene Audioeigenschaften der ersten Audiospur und der zweiten Audiospur beziehen, zur Wiedergabe der ersten Audiospur und der zweiten Audiospur;
Mittel zum Erhalten von Informationen über ein Modell eines Raums, der als eine Wiedergabeumgebung für eine virtuelle Realität oder eine erweiterte Realität zu verwenden ist;
Mittel zum Verwenden des Modells des Raums, um unter Verwendung der Informationen der Metadatendatei über die Qualitätsgrenzwerte einen optimalen Hörbereich in der Wiedergabeumgebung zu bestimmen;
Mittel zum Bestimmen eines Ortes der Wiedergabevorrichtung;
Mittel zum Vergleichen des Ortes der Wiedergabevorrichtung mit dem optimalen Hörbereich;
Mittel zum Überprüfen, ob sich der Ort der Wiedergabevorrichtung im optimalen Hörbereich befindet;
Mittel zum Binauralisieren, die dazu ausgelegt sind, das binauralisierte Signal derart zu bilden, dass es die Qualitätsgrenzwerte nicht überschreitet, wenn sich die Wiedergabevorrichtung (300) im optimalen Hörbereich befindet; und
Mittel zum Bereitstellen einer Anzeige für den Benutzer, wenn sich die Wiedergabevorrichtung außerhalb des optimalen Hörbereichs befindet, wobei, wenn sich die Wiedergabevorrichtung außerhalb des optimalen Hörbereichs befindet,
die Mittel zum Binauralisieren dazu ausgelegt sind, das binauralisierte Signal anzupassen, als wenn sich die Wiedergabevorrichtung an einem Ort des optimalen Hörbereichs (400) befinden würde, der dem Ort der Wiedergabevorrichtung (300) näher ist.

5. Einrichtung nach Anspruch 4, wobei die Mittel zum Binauralisieren dazu ausgelegt sind, das binauralisierte Signal durch eines oder mehreres von Folgendem anzupassen:
Abschwächen des binauralisierten Signals;
Verstärken des binauralisierten Signals;
Hinzufügen von Nachhall zum binauralisierten Signal;
Abschwächen von mehr hohen Frequenzen als tiefen Frequenzen;
stärkeres Abschwächen von einem oder mehreren Frequenzbereichen als von anderen Frequenzbereichen;
Gestalten des Klangs mit mehr Raumcharakter;
Modifizieren des binauralisierten Signals relativ zur Differenz zwischen einem ersten Abstand von der Wiedergabevorrichtung (300) vom Ort des optimalen Hörbereichs (400), der dem Ort der Wiedergabevorrichtung näher ist, und einem zweiten Abstand von der Wiedergabevorrichtung (300) von einer nächsten Klangquelle oder einer anderen Klangquelle oder einem Mittelpunkt von Klangquellen, der als Mittelwert der Koordinaten der Klangquellen berechnet ist.

6. Einrichtung nach Anspruch 4 oder 5, wobei die Mittel zum Erhalten von Informationen über das Modell des Raums Folgendes umfassen:
Mittel zum Erhalten von Informationen über eine Raumantwort der Wiedergabeumgebung, die anzeigt, wie verschiedene Teile des Raums auf verschiedene Frequenzen oder Frequenzbereiche reagieren; und
Mittel zum Verwenden der Raumantwort, um den optimalen Hörbereichs zu bestimmen.

7. Einrichtung nach Anspruch 6, die ferner mindestens Folgendes umfasst:
Mittel zum Erhalten der Informationen des Modells des Raums aus der Metadatendatei.

8. Einrichtung nach einem der Ansprüche 4 bis 7, die ferner Mittel zum Erzeugen der Anzeige durch Folgendes umfasst:
Mittel zum Anpassen eines Klangpegels von mindestens einer der ersten Audiospur und der zweiten Audiospur; und
Mittel zum Bereitstellen einer visuellen Anzeige des Ortes des Benutzers mit Bezug auf den optimalen Hörbereich.

9. Einrichtung nach Anspruch 8, wobei die Mittel zum Bereitstellen der visuellen Informationen des optimalen Hörbereichs ferner mindestens eines von Folgendem umfassen:
Mittel zum schärferen Repräsentieren von Details im optimalen Hörbereichs als von Details außerhalb des optimalen Hörbereichs;
Mittel zum Repräsentieren von Details im optimalen Hörbereichs mit anderen Farben als von Details außerhalb des optimalen Hörbereichs;
Mittel zum Repräsentieren von Details im optimalen Hörbereich als ein farbiges Bild und von Details außerhalb des optimalen Hörbereichs als ein Schwarzweißbild;
Mittel zum Repräsentieren des optimalen Hörbereichs als eine Kurve.

10. Einrichtung nach Anspruch 9, die ferner mindestens Folgendes umfasst:
Mittel zum Überprüfen, ob der Audiopräsentation Informationen über das Modell des Raums beigefügt sind; und
Mittel zum Verwenden der empfangenen Informationen über das Modell des Raums, um den optimalen Hörbereich zu bestimmen, wenn der Audiopräsentation Informationen über das Modell des Raums beigefügt sind.

11. Einrichtung nach einem der Ansprüche 4 bis 10, wobei die Audiopräsentation von einer Codiervorrichtung empfangen wird, die angeordnet ist, Metadaten für eine Audiopräsentation in einer virtuellen Realität oder einer erweiterten Realität mit Bezug auf mindestens ein erstes Klangobjekt und ein zweites Klangobjekt zu erzeugen, wobei die Codiervorrichtung Folgendes umfasst
Mittel zum Erzeugen einer ersten Audiospur aus Klangsignalen von einem ersten Klangobjekt;
Mittel zum Erzeugen einer zweiten Audiospur aus Klangsignalen von einem zweiten Klangobjekt;
Mittel zum Definieren, ob die erste Audiospur und die zweite Audiospur zusammen gut klingen, durch Anpassen von mindestens einigen Eigenschaften der ersten Audiospur und der zweiten Audiospur;
Mittel zum Definieren von Qualitätsgrenzwerten, die sich auf klangbezogene Audioeigenschaften der ersten Audiospur und der zweiten Audiospur beziehen, zur Wiedergabe der ersten Audiospur und der zweiten Audiospur;
Mittel zum Kombinieren der ersten Audiospur und der zweiten Audiospur zu einer Audiopräsentation;
Mittel zum Beifügen von Informationen über die Qualitätsgrenzwerte zur Audiopräsentation;
Mittel zum Erzeugen einer Metadatendatei aus den Informationen über die Grenzwerte und der Audiopräsentation; und
Mittel zum Übertragen der Metadatendatei zur Wiedergabevorrichtung.

12. Einrichtung nach Anspruch 11, wobei die Codiervorrichtung ferner Folgendes umfasst:
Mittel zum Bereitstellen eines Raummodells, das als eine virtuelle Realität oder eine erweiterte Realität bei der Wiedergabe der Audiopräsentation zu verwenden ist; und
Mittel zum Verwenden des Raummodells und der Qualitätsgrenzwerte, um einen optimalen Hörbereich für eine Wiedergabe der Audiopräsentation zu definieren.

13. Einrichtung nach Anspruch 12, wobei die Codiervorrichtung ferner Folgendes umfasst:
Mittel zum Einbinden von Informationen über den optimalen Hörbereich in die Metadatendatei.

## Revendications

1. Procédé de lecture audio dans une réalité virtuelle ou une réalité augmentée selon un emplacement d'un dispositif de lecture porté par un utilisateur et les emplacements d'au moins un premier objet sonore et un deuxième objet sonore, le procédé comprenant les étapes suivantes :
recevoir par un dispositif de lecture (300) une présentation audio comprenant une première piste audio générée à partir de signaux sonores provenant du premier objet sonore et une deuxième piste audio générée à partir de signaux sonores provenant du deuxième objet sonore, et un fichier de métadonnées comprenant des informations concernant des limites de qualité liées à des propriétés audio liées au son de la première piste audio et de la deuxième piste audio pour la lecture de la première piste audio et de la deuxième piste audio ;
obtenir des informations sur un modèle d'un espace à utiliser comme environnement de lecture de réalité virtuelle ou de réalité augmentée ;
utiliser le modèle de l'espace pour déterminer une zone d'écoute optimale dans l'environnement de réalité virtuelle ou de réalité augmentée en utilisant les informations du fichier de métadonnées concernant les limites de qualité ;
déterminer un emplacement du dispositif de lecture ;
comparer l'emplacement du dispositif de lecture avec la zone d'écoute optimale ; et
examiner l'emplacement du dispositif de lecture pour savoir s'il se trouve dans la zone d'écoute optimale ; et
lorsque le dispositif de lecture (300) se trouve dans la zone d'écoute optimale, binauraliser la première piste audio et la deuxième piste audio pour former un signal binauralisé de sorte que le signal binauralisé ne dépasse pas les limites de qualité ; et
lorsque le dispositif de lecture (300) se trouve en dehors de la zone d'écoute optimale, fournir une indication à l'utilisateur précisant si le dispositif de lecture se trouve en dehors de la zone d'écoute optimale, et régler la binauralisation comme si le dispositif de lecture était situé dans un emplacement de la zone d'écoute optimale (400) qui est plus proche de l'emplacement du dispositif de lecture (300).

2. Procédé selon la revendication 1, dans lequel le réglage comprend une ou plusieurs des opérations suivantes :
atténuer le signal binauralisé ;
amplifier le signal binauralisé ;
ajouter de la réverbération au signal binauralisé ;
atténuer plus de hautes fréquences que de basses fréquences ;
atténuer une ou plusieurs gammes de fréquences plus que d'autres gammes de fréquences ;
rendre le son plus ambiant ;
modifier le signal binauralisé par rapport à la différence entre une première distance dudit dispositif de lecture (300) audit emplacement de la zone d'écoute optimale (400) qui est plus proche de l'emplacement du dispositif de lecture et une deuxième distance du dispositif de lecture (300) à une source sonore qui est la source sonore la plus proche ou une autre source sonore ou un point central de sources sonores calculé en tant que moyenne des coordonnées des sources sonores.

3. Procédé selon la revendication 1 ou 2, dans lequel la présentation audio est reçue d'un dispositif de codage agencé pour générer des métadonnées pour une présentation audio dans une réalité virtuelle ou une réalité augmentée par rapport à au moins un premier objet sonore et un deuxième objet sonore, dans lequel le procédé mis en œuvre par le dispositif de codage comprend les étapes suivantes
générer une première piste audio à partir de signaux sonores provenant du premier objet sonore ;
générer une deuxième piste audio à partir de signaux sonores provenant du deuxième objet sonore ;
définir la première piste audio et la deuxième piste audio pour savoir si elles sonnent bien ensemble en réglant au moins certaines propriétés de la première piste audio et de la deuxième piste audio ;
définir des limites de qualité liées à des propriétés audio liées au son de la première piste audio et de la deuxième piste audio pour la lecture de la première piste audio et de la deuxième piste audio ;
combiner la première piste audio et la deuxième piste audio en une présentation audio ;
joindre des informations concernant les limites de qualité à la présentation audio ;
générer un fichier de métadonnées à partir des informations concernant les limites de qualité et de la présentation audio ; et
transmettre le fichier de métadonnées au dispositif de lecture.

4. Dispositif de lecture porté par un utilisateur comprenant :
des moyens pour recevoir une présentation audio comprenant une première piste audio et une deuxième piste audio et un fichier de métadonnées comprenant des informations concernant des limites de qualité liées à des propriétés audio liées au son de la première piste audio et de la deuxième piste audio pour la lecture de la première piste audio et de la deuxième piste audio ;
des moyens pour obtenir des informations sur un modèle d'un espace à utiliser comme environnement de lecture de réalité virtuelle ou de réalité augmentée ;
des moyens pour utiliser le modèle de l'espace pour déterminer une zone d'écoute optimale dans l'environnement de lecture en utilisant les informations du fichier de métadonnées concernant les limites de qualité ;
des moyens pour déterminer un emplacement du dispositif de lecture ;
des moyens pour comparer l'emplacement du dispositif de lecture avec la zone d'écoute optimale ;
des moyens pour examiner l'emplacement du dispositif de lecture pour savoir s'il se trouve dans la zone d'écoute optimale ;
des moyens de binauralisation configurés pour former le signal binauralisé de sorte qu'il ne dépasse pas les limites de qualité si le dispositif de lecture (300) se trouve dans la zone d'écoute optimale ; et
des moyens pour fournir, si le dispositif de lecture se trouve en dehors de la zone d'écoute optimale, une indication à l'utilisateur, dans lequel, si le dispositif de lecture se trouve en dehors de la zone d'écoute optimale, les moyens de binauralisation sont configurés pour régler le signal binauralisé comme si le dispositif de lecture était situé dans un emplacement de la zone d'écoute optimale (400) qui est plus proche de l'emplacement du dispositif de lecture (300).

5. Appareil selon la revendication 4, dans lequel les moyens de binauralisation sont configurés pour régler le signal binauralisé par une ou plusieurs des opérations suivantes :
atténuer le signal binauralisé ;
amplifier le signal binauralisé ;
ajouter de la réverbération au signal binauralisé ;
atténuer plus de hautes fréquences que de basses fréquences ;
atténuer une ou plusieurs gammes de fréquences plus que d'autres gammes de fréquences ;
rendre le son plus ambiant ;
modifier le signal binauralisé par rapport à la différence entre une première distance dudit dispositif de lecture (300) audit emplacement de la zone d'écoute optimale (400) qui est plus proche de l'emplacement du dispositif de lecture et une deuxième distance du dispositif de lecture (300) à une source sonore qui est la source sonore la plus proche ou une autre source sonore ou un point central de sources sonores calculé en tant que moyenne des coordonnées des sources sonores.

6. Appareil selon la revendication 4 ou 5, dans lequel lesdits moyens pour obtenir des informations sur le modèle de l'espace comprennent :
des moyens pour obtenir des informations d'une réponse de salle de l'environnement de lecture indiquant comment différentes parties de la salle réagissent aux différentes fréquences ou gammes de fréquences ; et
des moyens pour utiliser la réponse de salle pour déterminer la zone d'écoute optimale.

7. Appareil selon la revendication 6, comprenant en outre au moins ce qui suit :
des moyens pour obtenir les informations du modèle de l'espace à partir du fichier de métadonnées.

8. Appareil selon l'une des revendications 4 à 7, comprenant en outre des moyens pour générer ladite indication par :
des moyens pour régler un niveau sonore d'au moins une parmi la première piste audio et la deuxième piste audio ; et
des moyens pour fournir une indication visuelle de l'emplacement de l'utilisateur par rapport à la zone d'écoute optimale.

9. Appareil selon la revendication 8, dans lequel lesdits moyens pour fournir les informations visuelles de la zone d'écoute optimale comprennent en outre au moins l'un des moyens suivants :
des moyens pour représenter des détails dans la zone d'écoute optimale qui sont plus nets que les détails en dehors de la zone d'écoute optimale ;
des moyens pour représenter des détails dans la zone d'écoute optimale avec des couleurs différentes des celles des détails en dehors de la zone d'écoute optimale ;
des moyens pour représenter des détails dans la zone d'écoute optimale sous forme d'une image couleurs et des détails en dehors de la zone d'écoute optimale sous forme d'une image en noir et blanc ;
des moyens pour représenter la zone d'écoute optimale sous forme d'une courbe.

10. Appareil selon la revendication 9, comprenant en outre au moins les moyens suivants :
des moyens pour examiner la présentation audio pour savoir si elle est jointe à des informations sur le modèle de l'espace ; et
des moyens pour utiliser les informations reçues sur le modèle de l'espace pour déterminer la zone d'écoute optimale, si la présentation audio est jointe à des informations sur le modèle de l'espace.

11. Appareil selon l'une des revendications 4 à 10, dans lequel la présentation audio est reçue d'un dispositif de codage agencé pour générer des métadonnées pour une présentation audio dans une réalité virtuelle ou une réalité augmentée par rapport à au moins un premier objet sonore et un deuxième objet sonore, dans lequel le dispositif de codage comprend
des moyens pour générer une première piste audio à partir de signaux sonores provenant d'un premier objet sonore ;
des moyens pour générer une deuxième piste audio à partir de signaux sonores provenant d'un deuxième objet sonore ;
des moyens pour définir la première piste audio et la deuxième piste audio pour savoir si elles sonnent bien ensemble en réglant au moins certaines propriétés de la première piste audio et de la deuxième piste audio ;
des moyens pour définir des limites de qualité liées à des propriétés audio liées au son de la première piste audio et de la deuxième piste audio pour la lecture de la première piste audio et de la deuxième piste audio ;
des moyens pour combiner la première piste audio et la deuxième piste audio en une présentation audio ;
des moyens pour joindre des informations concernant les limites de qualité à la présentation audio ;
des moyens pour générer un fichier de métadonnées à partir des informations concernant les limites et de la présentation audio ; et
des moyens pour transmettre le fichier de métadonnées au dispositif de lecture.

12. Appareil selon la revendication 11, dans lequel le dispositif de codage comprend en outre :
des moyens pour fournir un modèle de salle à utiliser comme réalité virtuelle ou réalité augmentée dans la lecture de la présentation audio ; et
des moyens pour utiliser le modèle de salle et les limites de qualité pour définir une zone d'écoute optimale pour la lecture de la présentation audio.

13. Appareil selon la revendication 12, dans lequel le dispositif de codage comprend en outre :
des moyens pour inclure des informations de la zone d'écoute optimale dans le fichier de métadonnées.
